# EUROPEAN PATENT APPLICATION

(11) **EP 3 373 380 A1**
(43) Date of publication of application: **12.09.2018**
(21) Application number: 17159765.1
(22) Date of filing: 08.03.2017
(51) Int. Cl.: H01M 10/0567, H01M 10/052

(54) **ELECTROLYTE COMPOSITIONS COMPRISING MIXTURES OF 1,3,5-CYCLOHEXANE TRINITRILE COMPOUNDS AS ADDITIVES**

(71) Applicant: BASF SE, 67056 Ludwigshafen am Rhein (DE)
(72) Inventor: CHESNEAU, Frederick Francois, Ludwigshafen 67056 (DE); TAG, Corinna, Ludwigshafen 67056 (DE); HOECKER, Johannes David, Ludwigshafen 67056 (DE); MALKOWSKY, Itamar Michael, 200137 Shanghai (CN); NOGUCHI, Hiroyoshi, 106-6121 Tokyo (JP); SEKINE, Masaki, 106-6121 Tokyo (JP); FUKUZUMI, Takeo, 660-0083 Amagasaki (JP)
(74) Representative: BASF IP Association

(57) **Abstract**

An electrolyte composition containing
(i) at least one aprotic organic solvent;
(ii) at least one conducting salt;
(iii) 1,3,5-cyclohexane trinitrile(s), wherein the content of cis-1,3,5-cyclohexane trinitrile is at least 60 %, based on the total amount of 1,3,5-cyclohexane trinitrile(s); and
(iv) optionally one or more additives.

## Description

The present invention relates to an electrolyte composition containing
(i) at least one aprotic organic solvent;
(ii) at least one conducting salt;
(iii) 1,3,5-cyclohexane trinitrile(s), wherein the content of cis-1,3,5-cyclohexane trinitrile is at least 60 %, based on the total amount of 1,3,5-cyclohexane trinitriles; and
(iv) optionally one or more additives,
to the use of 1,3,5-cyclohexane trinitrile(s) with a minimum content of cis-1,3,5-cyclohexane trinitrile of 60% in electrochemical cells and to an electrochemical cell comprising said electrolyte composition.

Storing electrical energy is a subject of still growing interest. Efficient storage of electric energy would allow electric energy to be generated when it is advantageous and used when needed. Secondary electrochemical cells are well suited for this purpose due to their reversible conversion of chemical energy into electrical energy and vice versa (rechargeability). Secondary lithium batteries are of special interest for energy storage since they provide high energy density and specific energy due to the small atomic weight of the lithium ion, and the high cell voltages that can be obtained (typically 3 to 5 V) in comparison with other battery systems. For that reason, these systems have become widely used as a power source for many portable electronics such as cellular phones, laptop computers, mini-cameras, etc.

Secondary lithium batteries like lithium ion batteries typically comprise electrolyte compositions containing one or more organic aprotic solvents liked non-aqueous solvents like organic carbonates, ethers, esters and ionic liquids, at least one conducting salt like LiPF₆ and optionally one or more additives for enhancing the performance of electrolyte composition and battery. Useful additives are for example SEI additives, flame retardant additives, water scavenger, and overcharge protection additives. A lot of research is ongoing in respect to additives for use in electrolyte compositions to further improve the performance of the electrochemical cell containing the electrolyte composition in many different aspects, e.g. cycle life time, high temperature characteristics, safety, etc.

JP 2010-073367 A describes the use of different aliphatic cyano compounds as additives in non-aqueous electrolyte batteries with improved high-temperature characteristics. The aliphatic cyano compounds have three or more cyano groups straight chain or annular structure. One of the aliphatic cyano compounds described is cyclo-1,3,5-trinitriles without specifying the stereo chemistry of the cyclo trinitrile.

Other aspects of the performance of an electrochemical cell are the internal resistance and the increase of internal resistance and gas evolution over the life of the battery. Also the leaching of metal ions from the cathode active material present in the battery can be a problem. There is the need for additives for electrolyte compositions showing less internal resistance, less internal resistance increase, less gas evolution, and less metal bleaching from the cathode active material than common electrolyte compositions. It is in particular desirable if these additives do not have a detrimental effect on other properties of the electrochemical cells in which they are used.

It was an object of the present invention to provide an electrolyte composition yielding secondary batteries with improved properties like lower resistance increase, reduced metal ion bleaching and lower or similar gas evolution. A further object of the present invention was to provide secondary batteries of high energy density and/or higher operating voltage having good performance characteristics like lower impedance build up, lower resistance and less metal ion bleaching from the cathode active material.

This object is achieved by an electrolyte composition containing
(i) at least one aprotic organic solvent;
(ii) at least one conducting salt;
(iii) 1,3,5-cyclohexane trinitrile(s), wherein the content of cis-1,3,5-cyclohexane trinitrile is at least 60 %, based on the total amount of 1,3,5-cyclohexane trinitrile(s); and
(iv) optionally one or more additives.

The problem is further solved by an electrochemical cell comprising the electrolyte composition as described above and by the use of 1,3,5-cyclohexane trinitrile(s) wherein the content of cis-1,3,5-cyclohexane trinitrile is at least 60 % in electrochemical cells.

The addition of both 1,3,5-cyclohexane trinitrile(s) to an electrolyte composition for rechargeable electrochemical cells, wherein the content of cis-1,3,5-cyclohexane trinitrile is at least 60 %, based on the total amount 1,3,5-cyclohexane trinitrile(s) present, surprisingly leads to electrochemical cells with less resistance increase, less metal ion dissolution and less volume increase during high temperature storage than the addition of cis-1,3,5-cyclohexane trinitrile and trans-1,3,5-cyclohexane trinitrile, wherein the content of cis-1,3,5-cyclohexane trinitrile is less than 60 %.

In the following the invention is described in detail.

The inventive electrolyte composition contains 1,3,5-cyclohexane trinitrile(s). The content of cis-1,3,5-cyclohexane trinitrile is at least 60 %, based on the total amount 1,3,5-cyclohexane trinitriles (iii) present in the electrolyte composition.

1,3,5-cyclohexane trinitrile exists in two different stereo isomers, namely cis-1,3,5-cyclohexane trinitrile and trans-1,3,5-cyclohexane trinitrile.

Cis-1,3,5-cyclohexane trinitrile has the structure 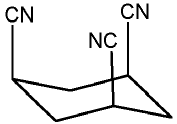 wherein in all carbonitrile groups are in the cis-position. It may also be called a*ll-*cis-1,3,5-cyclohexane trinitrile.

The structure of trans-1,3,5-cyclohexane trinitrile is 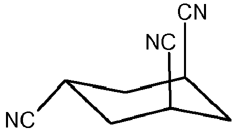 wherein two carbonitrile groups are in cis-position and one carbonitrile group is in trans-position.

The ratio of the cis- and trans-isomer may be determined by gas chromatography, e.g. with 30 m HP-5; 1 µm; 0.25 mm temperature: 40°C to 280°C with a heating rate of 5°C/min, keeping the temperature for 30 min at 280°C. Retention time all-cis isomer (tR) = 39.9 min and tR(cis-trans isomer) = 37.8 min with He used as carrying gas. The person skilled in the art knows the determination of the ratio of cis- and trans-isomers. A description of the synthesis of the trinitrile may be found in e.g. Hermann A. Mayer, Philipp Stößel, Riad Fawzi, and Manfred Steimann Chemische Berichte 1995, Vol. 128, pages 719 to 723.

For the 1,3,5-cyclohexane trinitriles are commonly two different CAS-numbers and three different Reaxyx Registry numbers are known. CAS 183582-92-5/Reaxys Registry number 2830394 denote a mixture of cis- and trans-1,3,5-cyclohexane trinitriles with a content of cis-isomer of about 58 %. CAS 168280-46-4/Reaxys Registry number 7422733 are used for the cis-isomer and Reaxys Registry number 9048376 denotes the trans-isomer.

The electrolyte composition contains -1,3,5-cyclohexane trinitrile(s), wherein the content of the cis-isomer is at least 60 %, based on the total amount of the cyclohexane trinitriles present in the electrolyte composition. Preferably the upper limit of the content of cis-isomer is 99 %, more preferred the upper limit is 96 % and even more preferred the upper limit of the content of cis isomer is 90 %. Preferably the lower limit of the content of cis-isomer is at least 75 %. Preferably the content of the cis isomer ranges from 60 % to 99 %, more preferred from 60 % to 96 %, even more preferred from 60 % to 90 % and most preferred from 75 % to 90 %. The ratio of cis-and trans-isomer is preferably determined by means of gas chromatography as described above.

An explanation for the improved effect of an excess of cis-1,3,5-cyclohexane trinitrile may be that in the cis-isomer molecule all nitrile groups are directed to the same side of the cyclohexane cycle. This allows a contribution of all three nitrile groups to complexation or interaction with the same reactive site of the cathode active material in comparison to the trans-isomer. In trans-1,3,5-cyclohexane trinitrile only two nitrile groups are pointing to the same side of the cyclohexane cycle whereas the third nitrile group is facing to the other side of the cyclohexane cycle.

The minimum total concentration of 1,3,5-cyclohexane trinitrile(s) (iii) in the electrolyte composition is usually at least 0.01 wt.-%, based on the total weight of the electrolyte composition. The maximum total concentration of 1,3,5-cyclohexane trinitrile(s) (iii) in the electrolyte composition is usually 5 wt.-%, based on the total weight of the electrolyte composition. Usually the electrolyte composition contains in total 0.01 to 5 wt.-% 1,3,5-cyclohexane trinitrile(s) (iii), preferably the electrolyte composition contains in total 0.05 to 3 wt.-% 1,3,5-cyclohexane trinitrile(s) (iii), more preferred the electrolyte composition contains in total 0.1 to 2.5 wt.-% cyclohexane trinitrile(s) (iii), based on the total weight of the electrolyte composition. The term "wt.-%" as used herein means percent by weight.

The cis- and trans-1,3,5-cyclo trinitriles may be added separately in the amounts resulting in the desired ratio and total concentration of cis-and trans-isomers or a mixture containing both isomers in the desired ratio may be added according to the desired concentration to electrolyte composition.

A further aspect of the present invention is the use of 1,3,5-cyclohexane trinitrile(s) in electrochemical cells, wherein the content of cis-1,3,5-cyclohexane trinitrile is at least 60 %, based on the total amount of 1,3,5-cyclohexane trinitrile(s) present in the electrochemical cell, preferably 1,3,5-cyclohexane trinitrile(s) are used as additive for reducing metal leaching from electrode active material present in the electrochemical cells.

It is preferred to use 1,3,5-cyclohexane trinitrile(s) as additives in electrolyte compositions for electrochemical cells, more preferred the 1,3,5-cyclohexane trinitrile(s) are used as additives in electrolyte compositions for lithium batteries, even more preferred in electrolyte compositions for lithium ion batteries. The electrolyte compositions are preferably non-aqueous.

The electrolyte composition contains at least one aprotic organic solvent (i), more preferred at least two aprotic organic solvents. According to one embodiment the electrolyte composition may contain up to ten aprotic organic solvents.

The electrolyte composition contains at least one aprotic organic solvent (i). The at least one aprotic organic solvent may be selected from optionally fluorinated aprotic organic solvents, i.e. from fluorinated and non-fluorinated aprotic organic solvents. The electrolyte composition may contain a mixture of fluorinated and non-fluorinated aprotic organic solvents.

The aprotic organic solvent is preferably selected from optionally fluorinated cyclic and acyclic organic carbonates, optionally fluorinated acyclic ethers and polyethers, optionally fluorinated cyclic ethers, optionally fluorinated cyclic and acyclic acetales and ketales, optionally fluorinated orthocarboxylic acids esters, optionally fluorinated cyclic and acyclic esters and diesters of carboxylic acids, optionally fluorinated cyclic and acyclic sulfones, optionally fluorinated cyclic and acyclic nitriles and dinitriles and optionally fluorinated cyclic and acyclic phosphates and mixtures thereof.

Examples of optionally fluorinated cyclic carbonates are ethylene carbonate (EC), propylene carbonate (PC) and butylene carbonate (BC), wherein one or more H may be substituted by F and/or an C₁ to C₄ alkyl group, e.g. 4-methyl ethylene carbonate, monofluoroethylene carbonate (FEC), and cis- and trans-difluoroethylene carbonate. Preferred optionally fluorinated cyclic carbonates are ethylene carbonate, monofluoroethylene carbonate, and propylene carbonate, in particular ethylene carbonate.

Examples of optionally fluorinated acyclic carbonates are di-C₁-C₁₀-alkylcarbonates, wherein each alkyl group is selected independently from each other and wherein one or more H may be substituted by F. Preferred are optionally fluorinated di-C₁-C₄-alkylcarbonates. Examples are e.g. diethyl carbonate (DEC), ethyl methyl carbonate (EMC), 2,2,2-trifluoroethyl methyl carbonate (TFEMC), dimethyl carbonate (DMC), trifluoromethyl methyl carbonate (TFMMC), and methylpropyl carbonate. Preferred acyclic carbonates are diethyl carbonate (DEC), ethyl methyl carbonate (EMC), and dimethyl carbonate (DMC).

In one embodiment of the invention the electrolyte composition contains mixtures of optionally fluorinated acyclic organic carbonates and cyclic organic carbonates at a ratio by weight of from 1:10 to 10:1, preferred of from 3:1 to 1:1.

Examples of optionally fluorinated acyclic ethers and polyethers are optionally fluorinated di-C₁-C₁₀-alkylethers, optionally fluorinated di-C₁-C₄-alkyl-C₂-C₆-alkylene ethers, optionally fluorinated polyethers, and fluorinated ethers of formula R'-(O-CFₚH₂₋ₚ)_{q}-R" wherein R' is a C₁-C₁₀ alkyl group or a C₃-C₁₀ cycloalkyl group, wherein one or more H of an alkyl and/or cycloalkyl group are substituted by F; R" is H, F, a C₁-C₁₀ alkyl group, or a C₃-C₁₀ cycloalkyl group, wherein one or more H of an alkyl and/or cycloalkyl group are substituted by F; p is 1 or 2; and q is 1, 2 or 3.

According to the invention each alkyl group of the optionally fluorinated di-C₁-C₁₀-alkylethers is selected independently from the other wherein one or more H of an alkyl group may be substituted by F. Examples of optionally fluorinated di-C₁-C₁₀-alkylethers are dimethylether, ethylmethylether, diethylether, methylpropylether, diisopropylether, di-n-butylether, 1,1,2,2-tetrafluoroethyl-2,2,3,3-tetrafluoropropyl ether (CF₂HCF₂CH₂OCF₂CF₂H), and 1H,1H,5H-perfluoropentyl-1,1,2,2-tetrafluoroethylether (CF₂H(CF₂)₃CH₂OCF₂CF₂H).

Examples of optionally fluorinated di-C₁-C₄-alkyl-C₂-C₆-alkylene ethers are 1,2-dimethoxyethane, 1,2-diethoxyethane, diglyme (diethylene glycol dimethyl ether), triglyme (triethyleneglycol dimethyl ether), tetraglyme (tetraethyleneglycol dimethyl ether), and diethylenglycoldiethylether.

Examples of suitable optionally fluorinated polyethers are polyalkylene glycols wherein one or more H of an alkyl or alkylene group may be substituted by F, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably dimethyl- or diethyl- end-capped polyalkylene glycols. The molecular weight M_{w} of suitable polyalkylene glycols and especially of suitable polyethylene glycols may be at least 400 g/mol. The molecular weight M_{w} of suitable polyalkylene glycols and especially of suitable polyethylene glycols may be up to 5 000 000 g/mol, preferably up to 2 000 000 g/mol.

Examples of fluorinated ethers of formula R'-(O-CFₚH₂₋ₚ)_{q}-R" are 1,1,2,2-tetrafluoroethyl-2,2,3,3-tetrafluoropropyl ether (CF₂HCF₂CH₂OCF₂CF₂H), and 1 H,1H,5H-perfluoropentyl-1,1,2,2-tetrafluoroethylether (CF₂H(CF₂)₃CH₂OCF₂CF₂H).

Examples of optionally fluorinated cyclic ethers are 1,4-dioxane, tetrahydrofuran, and their derivatives like 2-methyl tetrahydrofuran wherein one or more H of an alkyl group may be substituted by F.

Examples of optionally fluorinated acyclic acetals are 1,1-dimethoxymethane and 1,1-diethoxymethane. Examples of cyclic acetals are 1,3-dioxane, 1,3-dioxolane, and their derivatives such as methyl dioxolane wherein one or more H may be substituted by F.

Examples of optionally fluorinated acyclic orthocarboxylic acid esters are tri-C₁-C₄ alkoxy methane, in particular trimethoxymethane and triethoxymethane. Examples of suitable cyclic orthocarboxylic acid esters are 1,4-dimethyl-3,5,8-trioxabicyclo[2.2.2]octane and 4-ethyl-1-methyl-3,5,8-trioxabicyclo[2.2.2]octane wherein one or more H may be substituted by F.

Examples of optionally fluorinated acyclic esters of carboxylic acids are ethyl and methyl formiate, ethyl and methyl acetate, ethyl and methyl proprionate, and ethyl and methyl butanoate, and esters of dicarboxylic acids like 1,3-dimethyl propanedioate wherein one or more H may be substituted by F. An example of a cyclic ester of carboxylic acids (lactones) is γ-butyrolactone.

Examples of optionally fluorinated cyclic and acyclic sulfones are ethyl methyl sulfone, dimethyl sulfone, and tetrahydrothiophene-S,S-dioxide (sulfolane).

Examples of optionally fluorinated cyclic and acyclic nitriles and dinitriles are adipodinitrile, acetonitrile, propionitrile, and butyronitrile wherein one or more H may be substituted by F.

Examples of optionally fluorinated cyclic and acyclic phosphates are trialkyl phosphates wherein one or more H of an alkyl group may be substituted by F like trimethyl phosphate, triethyl phosphate, and tris(2,2,2-trifluoroethyl)phosphate.

More preferred the aprotic organic solvent(s) are selected from optionally fluorinated ethers and polyethers, optionally fluorinated cyclic and acyclic organic carbonates, optionally fluorinated cyclic and acyclic esters and diesters of carboxylic acids and mixtures thereof. Even more preferred the aprotic organic solvent(s) are selected from optionally fluorinated ethers and polyethers, and optionally fluorinated cyclic and acyclic organic carbonates, and mixtures thereof.

According to one embodiment the electrolyte composition contains at least solvent selected from fluorinated ethers and polyethers, e.g. compounds of formula fluorinated ethers of formula R'-(O-CFₚH₂₋ₚ)_{q}-R" as defined above like CF₂HCF₂CH₂OCF₂CF₂H or CF₂H(CF₂)₃CH₂OCF₂CF₂H.

According to another embodiment, the electrolyte composition contains at least one solvent selected from fluorinated cyclic carbonate like 1-fluoro ethyl carbonate.

According to a further embodiment the electrolyte composition contains at least one solvent selected from fluorinated cyclic carbonate, e.g. 1-fluoro ethyl carbonate, and at least one solvent selected from fluorinated ethers and polyethers, e.g. compounds of formula fluorinated ethers of formula R'-(O-CFᵣH₂₋ᵣ)ₛ-R" as defined above like CF₂HCF₂CH₂OCF₂CF₂H or CF₂H(CF₂)₃CH₂OCF₂CF₂H.

According to another embodiment the electrolyte composition contains at least one fluorinated cyclic carbonate, e.g. 1-fluoro ethyl carbonate and at least one non-fluorinated acyclic organic carbonate, e.g. dimethyl carbonate, diethyl carbonate or ethyl methyl carbonate.

The electrolyte composition contains at least one lithium ion containing conducting salt (ii). The electrolyte composition functions as a medium that transfers ions participating in the electrochemical reaction taking place in an electrochemical cell. The lithium ion containing conducting salt(s) (ii) present in the electrolyte composition are usually solvated in the aprotic organic solvent(s) (i). Examples of lithium ion containing conducting salts are
- Li[F₆₋ₓP(C_{y}F_{2y+1})ₓ], wherein x is an integer in the range from 0 to 6 and y is an integer in the range from 1 to 20;
   Li[B(R^{I})₄], Li[B(R^{I})₂(OR^{II}O)] and Li[B(OR^{II}O)₂] wherein each R^{I} is independently from each other selected from F, Cl, Br, I, C₁-C₄ alkyl, C₂-C₄ alkenyl, C₂-C₄ alkynyl, OC₁-C₄ alkyl, OC₂-C₄ alkenyl, and OC₂-C₄ alkynyl wherein alkyl, alkenyl, and alkynyl may be substituted by one or more OR^{III}, wherein R^{III} is selected from C₁-C₆ alkyl, C₂-C₆ alkenyl, and C₂-C₆ alkynyl, and
   (OR^{II}O) is a bivalent group derived from a 1,2- or 1,3-diol, a 1,2- or 1,3-dicarboxlic acid or a 1,2- or 1,3-hydroxycarboxylic acid, wherein the bivalent group forms a 5- or 6-membered cycle via the both oxygen atoms with the central B-atom;
- LiClO₄; LiAsF₆; LiCF₃SO₃; Li₂SiF₆; LiSbF₆; LiAlCl₄, Li(N(SO₂F)₂), lithium tetrafluoro (oxalato) phosphate; lithium oxalate; and
- salts of the general formula Li[Z(CₙF₂ₙ₊₁SO₂)ₘ], where m and n are defined as follows:
   m = 1 when Z is selected from oxygen and sulfur,
   m = 2 when Z is selected from nitrogen and phosphorus,
   m = 3 when Z is selected from carbon and silicon, and
   n is an integer in the range from 1 to 20.

Suited 1,2- and 1,3-diols from which the bivalent group (OR^{II}O) is derived may be aliphatic or aromatic and may be selected, e.g., from 1,2-dihydroxybenzene, propane-1,2-diol, butane-1,2-diol, propane-1,3-diol, butan-1,3-diol, cyclohexyl-trans-1,2-diol and naphthalene-2,3-diol which are optionally are substituted by one or more F and/or by at least one straight or branched non fluorinated, partly fluorinated or fully fluorinated C₁-C₄ alkyl group. An example for such 1,2- or 1,3-diole is 1,1,2,2-tetra(trifluoromethyl)-1,2-ethane diol.

"Fully fluorinated C₁-C₄ alkyl group" means, that all H-atoms of the alkyl group are substituted by F.

Suited 1,2- or 1,3-dicarboxlic acids from which the bivalent group (OR^{II}O) is derived may be aliphatic or aromatic, for example oxalic acid, malonic acid (propane-1,3-dicarboxylic acid), phthalic acid or isophthalic acid, preferred is oxalic acid. The 1,2- or 1,3-dicarboxlic acid are optionally substituted by one or more F and/or by at least one straight or branched non fluorinated, partly fluorinated or fully fluorinated C₁-C₄ alkyl group.

Suited 1,2- or 1,3-hydroxycarboxylic acids from which the bivalent group (OR^{II}O) is derived may be aliphatic or aromatic, for example salicylic acid, tetrahydro salicylic acid, malic acid, and 2-hydroxy acetic acid, which are optionally substituted by one or more F and/or by at least one straight or branched non fluorinated, partly fluorinated or fully fluorinated C₁-C₄ alkyl group. An example for such 1,2- or 1,3-hydroxycarboxylic acids is 2,2-bis(trifluoromethyl)-2-hydroxy-acetic acid.

Examples of Li[B(R^{I})₄], Li[B(R^{I})₂(OR^{II}O)] and Li[B(OR^{II}O)₂] are LiBF₄, lithium difluoro oxalato borate and lithium dioxalato borate.

Preferably the at least one conducting salt (ii) is selected from LiPF₆, LiAsF₆, LiSbF₆, LiCF₃SO₃, LiBF₄, lithium bis(oxalato) borate, lithium difluoro(oxalato) borate, LiClO₄, LiN(SO₂C₂F₅)₂, LiN(SO₂CF₃)₂, LiN(SO₂F)₂, and LiPF₃(CF₂CF₃)₃, more preferred the conducting salt (ii) is selected from LiPF₆ and LiBF₄, and the most preferred conducting salt (ii) is LiPF₆.

The at least one conducting salt is usually present at a minimum concentration of at least 0.1 mol/l, preferably the concentration of the at least one conducting salt is 0.5 to 2 mol/l based on the entire electrolyte composition.

The electrolyte composition according to the present invention may contain at least one further additive different from the trinitrile cyclohexanes (iii). The further additive may be selected from polymers, film forming additives, flame retardants, overcharging additives, wetting agents, HF and/or H₂O scavenger, stabilizer for LiPF₆ salt, ionic solvation enhancer, corrosion inhibitors, and gelling agents, and the like.

Examples for polymers used in electrolyte compositions are polyvinylidene fluoride, polyvinylidene-hexafluoropropylene copolymers, polyvinylidene-hexafluoropropylenechlorotrifluoroethylene copolymers, Nafion, polyethylene oxide, polymethyl methacrylate, polyacrylonitrile, polypropylene, polystyrene, polybutadiene, polyethylene glycol, polyvinylpyrrolidone, polyaniline, polypyrrole and/or polythiophene. These polymers may be added to electrolyte compositions containing a solvent or solvent mixture in order to convert liquid electrolytes into quasi-solid or solid electrolytes and thus to improve solvent retention, especially during ageing.

Examples of flame retardants are organic phosphorous compounds like cyclophosphazenes, phosphoramides, alkyl and/or aryl tri-substituted phosphates, alkyl and/or aryl di- or tri-substituted phosphites, alkyl and/or aryl di- substituted phosphonates, alkyl and/or aryl tri-substituted phosphines, and fluorinated derivatives thereof.

Examples of HF and/or H₂O scavenger are optionally halogenated cyclic and acyclic silylamines.

Examples of overcharge protection additives are cyclohexylbenzene, o-terphenyl, p-terphenyl, and biphenyl and the like, preferred are cyclohexylbenzene and biphenyl.

Another class of additives are film forming additives, also called SEI-forming additives. An SEI forming additive according to the present invention is a compound which decomposes on an electrode to form a passivation layer on the electrode which prevents degradation of the electrolyte and/or the electrode. In this way, the lifetime of a battery is significantly extended. Preferably the SEI forming additive forms a passivation layer on the anode. An anode in the context of the present invention is understood as the negative electrode of a battery. Preferably, the anode has a reduction potential of 1 Volt or less against lithium such as a lithium intercalating graphite anode. In order to determine if a compound qualifies as anode film forming additive, an electrochemical cell can be prepared comprising a graphite electrode and a metal counter electrode, and an electrolyte containing a small amount of said compound, typically from 0.1 to 10 wt.-% of the electrolyte composition, preferably from 0.2 to 5 wt.-% of the electrolyte composition. Upon application of a voltage between anode and lithium metal, the differential capacity of the electrochemical cell is recorded between 0.5 V and 2 V. If a significant differential capacity is observed during the first cycle, for example -150 mAh/V at 1 V, but not or essentially not during any of the following cycles in said voltage range, the compound can be regarded as SEI forming additive.

According to the present invention the electrolyte composition preferably contains at least one SEI forming additive. SEI forming additives are known to the person skilled in the art. More preferred the electrolyte composition contains at least one SEI forming selected from vinylene carbonate and its derivatives such as vinylene carbonate and methylvinylene carbonate; fluorinated ethylene carbonate and its derivatives such as monofluoroethylene carbonate, cis-and trans-difluorocarbonate; organic sultones such as propylene sultone, propane sultone and their derivatives; ethylene sulfite and its derivatives; oxalate comprising compounds such as lithium oxalate, oxalato borates including dimethyl oxalate, lithium bis(oxalate) borate, lithium difluoro (oxalato) borate, and ammonium bis(oxalato) borate, and oxalato phosphates including lithium tetrafluoro (oxalato) phosphate; and sulfur containing additives as described in detail in WO 2013/026854 A1, in particular the sulfur containing additives shown on page 12 line 22 to page 15, line 10.

A compound added as additive may have more than one effect in the electrolyte composition and the device comprising the electrolyte composition. E.g. lithium oxalato borate may be added as additive enhancing the SEI formation but it may also be added as conducting salt.

In case one or more further additives are present, the total concentration of all further additives is at least 0.05 wt.-%, based on the total amount of the electrolyte composition, preferred the total concentration of the one or more further additives is 0.1 to 30 wt.-%, more preferred 0.5 to 10 wt.-%.

According to one embodiment of the present invention the electrolyte composition contains at least one SEI forming additive, all as described above or as described as being preferred.

In one embodiment of the present invention, the electrolyte composition contains:
(i) at least 74.89 wt.-% of at least one organic aprotic solvent,
(ii) 0.1 to 25 wt.-% of at least one conducting salt;
(iii) in total 0.01 to 5 wt.-% of 1,3,5-cyclohexane trinitrile(s), wherein the content of cis-1,3,5-cyclohexane trinitrile is at least 60 % based on the total amount of 1,3,5-cyclohexane trinitrile(s); and
(iv) 0 to 25 wt.-% of at least one additive,
based on the total weight of the electrolyte composition.

The electrolyte composition is preferably non-aqueous. In one embodiment of the present invention, the water content of the electrolyte composition is preferably below 100 ppm, based on the weight of the respective inventive formulation, more preferred below 50 ppm, most preferred below 30 ppm. The water content may be determined by titration according to Karl Fischer, e.g. described in detail in DIN 51777 or ISO760: 1978.

In one embodiment of the present invention, the HF-content of the electrolyte composition is preferably below 100 ppm, based on the weight of the respective inventive formulation, more preferred below 50 ppm, most preferred below 30 ppm. The HF content may be determined by titration.

The electrolyte composition is preferably liquid at working conditions; more preferred it is liquid at 1 bar and 25 °C, even more preferred the electrolyte composition is liquid at 1 bar and -15 °C, in particular the electrolyte composition is liquid at 1 bar and -30 °C, even more preferred the electrolyte composition is liquid at 1 bar and -50 °C. Such liquid electrolyte compositions are particularly suitable for outdoor applications, for example for use in automotive batteries.

The electrolyte compositions of the invention are prepared by methods which are known to the person skilled in the field of the production of electrolytes, generally by dissolving the cis- and trans- 1,3,5-cyclohexane trinitriles, the lithium conducting salt(s) (ii) and optionally additional additives (iv) as described above in the aprotic solvent(s) (i).

The electrolyte compositions are used in electrochemical cells like secondary lithium batteries, double layer capacitors, and lithium ion capacitors, preferably the inventive electrolyte compositions are used in secondary lithium batteries and more preferred in lithium ion batteries.

Another aspect of the invention are electrochemical cells comprising the electrolyte as described above or as described as preferred.

The electrochemical cell usually comprises
(A) an anode comprising at least one anode active material,
(B) a cathode comprising at least one cathode active material; and
(C) the electrolyte composition as described above.

The general construction of such electrochemical devices is known and is familiar to the person skilled in this art - for batteries.

The inventive electrochemical cell may be a secondary lithium battery, a double layer capacitor, or a lithium ion capacitor. Preferably the electrochemical cell is a secondary lithium battery. The term "secondary lithium battery" as used herein means a secondary electrochemical cell, wherein the anode comprises lithium metal or lithium ions sometime during the charge/discharge of the cell. The anode may comprise lithium metal or a lithium metal alloy, a material occluding and releasing lithium ions, or other lithium containing compounds; e.g. the lithium battery may be a lithium ion battery, a lithium/sulphur battery, or a lithium/selenium battery.

In particular preferred the electrochemical device is a lithium ion battery, i.e. a secondary lithium ion electrochemical cell comprising a cathode comprising a cathode active material that can reversibly occlude and release lithium ions and an anode comprising an anode active material that can reversibly occlude and release lithium ions. The terms "secondary lithium ion electrochemical cell" and "(secondary) lithium ion battery" are used interchangeably within the present invention.

The inventive electrochemical cell comprises a cathode (B) comprising at least one cathode active material. The at least one cathode active material comprises a material capable of occluding and releasing lithium ions and may be selected from lithium transition metal oxides and lithium transition metal phosphates of olivine structure.

Examples of lithium transition metal phosphates of olivine structure are LiFePO₄; LiNiPO₄; LiMnPO₄; and LiCoPO₄. Examples of mixed lithium transition metal oxides are LiCoO₂, LiNiO₂, LiMnO₂, mixed lithium transition metal oxides with layer structure, manganese containing spinels, and lithium intercalating mixed oxides of Ni, Al and at least one second transition metal.

Preferably the at least one cathode active material is selected from mixed lithium transition metal oxides containing Mn and at least one second transition metal; lithium intercalating mixed oxides containing Ni, Al and at least one second transition metal; LiMnPO₄; LiNiPO₄; and LiCoPO₄.

Examples of mixed lithium transition metal oxides containing Mn and at least one second transition metal are lithium transition metal oxides with layered structure of formula (II)

Li₁₊ₑ(NiₐCo_{b}Mn_{c}M_{d})₁₋ₑO₂ (II)

wherein
a is in the range of from 0.05 to 0.9, preferred in the range of 0.1 to 0.8,
b is in the range of from zero to 0.35,
c is in the range of from 0.1 to 0.9, preferred in the range of 0.2 to 0.8,
d is in the range of from zero to 0.2,
e is in the range of from zero to 0.3, preferred in the range of > zero to 0.3, more preferred in the range of 0.05 to 0.3,
with a + b+ c+ d = 1, and
M being one or more metals selected from Na, K, Al, Mg, Ca, Cr, V, Mo, Ti, Fe, W, Nb, Zr, and Zn.

Cobalt containing compounds of formula (II) are also named NCM.

Lithium transition metal oxides with layered structure of formula (II) wherein e is larger than zero are also called overlithiated.

Preferred lithium transition metal oxides with layered structure of formula (II) are compounds forming a solid solution wherein a LiM'O₂ phase in which M' is Ni, and optionally one or more transition metals selected from Co and Mn and a Li₂MnO₃ phase are mixed and wherein one or more metal M as defined above may be present. The one or more metals M are also called " dopants" or "doping metal" since they are usually present at minor amounts, e.g. at maximum 10 mol-% M or at maximum 5 mol-% M or at maximum 1 mol.-% based on the total amount of metal except lithium present in the transition metal oxide. In case one or more metals M are present, they are usually present in an amount of at least 0.01 mol-% or at least 0.1 mol-% based on the total amount of metal except lithium present in the transition metal oxide. These compounds are also expressed by formula (IIa)

z LiM'O₂ • (1-z) Li₂MnO₃ (IIa)

wherein M' is Ni and at least one metal selected from Mn and Co;
z is 0.1 to 0.8,
and wherein one or more metals selected from Na, K, Al, Mg, Ca, Cr, V, Mo, Ti, Fe, W, Nb, Zr, and Zn may be present.

Electrochemically, the Ni and if present Co atoms in the LiM'O₂ phase participate in reversible oxidation and reduction reactions leading to Li-ions deintercalation and intercalation, respectively, at voltages below 4.5 V vs. Li⁺/Li, while the Li₂MnO₃ phase participates only in oxidation and reduction reactions at voltages equal or above 4.5 V vs. Li⁺/Li given that Mn in the Li₂MnO₃ phase is in its +4 oxidation state. Therefore, electrons are not removed from the Mn atoms in this phase but from the 2p orbitals of oxygen ions, leading to the removal of oxygen for the lattice in the form of O₂ gas at least in the first charging cycling.

These compounds are also called HE-NCM due to their higher energy densities in comparison to usual NCMs. Both HE-NCM and NCM have operating voltages of about 3.0 to 3.8 V against Li/Li⁺, but high cut off voltages have to be used both for activating and cycling of HE-NCMs to actually accomplish full charging and to benefit from their higher energy densities. Usually the upper cut-off voltage for the cathode during charging against Li/Li⁺ is of at least 4.5 V for activating the HE-NCM, preferably of at least 4.6 V, more preferred of at least 4.7 V and even more preferred of at least 4.8 V. The term "upper cut-off voltage against Li/Li⁺ during charging" of the electrochemical cell means the voltage of the cathode of the electrochemical cell against a Li/Li⁺ reference anode which constitute the upper limit of the voltage at which the electrochemical cell is charged. Examples of HE-NCMs are
0.33Li₂MnO₃•0.67Li(Ni_{0.4}Co_{0.2}Mn_{0.4})O₂, 0.42Li₂MnO₃•0.58Li(Ni_{0.4}Co_{0.2}Mn_{0.4})O₂,
0.50Li₂MnO₃•0.50Li(Ni_{0.4}Co_{0.2}Mn_{0.4})O₂, 0.40Li₂MnO₃•0.60Li(Ni_{0.8}Co_{0.1}Mn_{0.1})O₂, and
0.42Li₂MnO₃•0.58Li(Ni_{0.6}Mn_{0.4})O₂.

Examples of manganese-containing transition metal oxides with layer structure of formula (II) wherein d is zero are LiNi_{0.33}Mn_{0.67}O₂, LiNi_{0.25}Mn_{0.75}O₂, LiNi_{0.35}Co_{0.15}Mn_{0.5}O₂, LiNi_{0.21}Co_{0.08}Mn_{0.71}O₂, LiNi_{0.22}Co_{0.12}Mn_{0.66}O₂, LiNi_{0.8}Co_{0.1}Mn_{0.1}O₂, LiNi_{0.6}Co_{0.2}Mn_{0.2}O₂, and LiNi_{0.5}Co_{0.2}Mn_{0.3}O₂. It is preferred that the transition metal oxides of general formula (II) wherein d is zero do not contain further cations or anions in significant amounts.

Examples of manganese-containing transition metal oxides with layer structure of formula (II) wherein d is larger than zero are 0.33Li₂MnO₃•0.67Li(Ni_{0.4}Co_{0.2}Mn_{0.4})O₂, 0.42Li₂MnO₃•0.58Li(Ni_{0.4}Co_{0.2}Mn_{0.4})O₂, 0.50Li₂MnO₃•0.50Li(Ni_{0.4}Co_{0.2}Mn_{0.2}O₂, 0.40Li₂MnO₃•0.60Li(Ni_{0.8}Co_{0.1}Mn_{0.1})O₂, and 0.42Li₂MnO₃•0.58Li(Ni_{0.6}Mn_{0.4})O₂ wherein one or more metal M selected from Na, K, Al, Mg, Ca, Cr, V, Mo, Ti, Fe, W, Nb, Zr, and Zn may be present. The one or more doping metal is preferably present up to 1 mol-%, based on the total amount of metal except lithium present in the transition metal oxide.

Other preferred compounds of formula (II) are Ni-rich compounds, wherein the content of Ni is at least 50 mol.% based on the total amount of transition metal present. This includes compounds of formula (IIb)

Li₁₊ₑ(NiₐCo_{b}Mn_{c}M_{d})₁₋ₑO₂ (IIb)

wherein
a is in the range of from 0.5 to 0.9, preferred in the range of 0.5 to 0.8,
b is in the range of from zero to 0.35,
c is in the range of from 0.1 to 0.5, preferred in the range of 0.2 to 0.5,
d is in the range of from zero to 0.2,
e is in the range of from zero to 0.3,
with a + b+ c+ d = 1, and
M being one or more metals selected from Na, K, Al, Mg, Ca, Cr, V, Mo, Ti, Fe, W, Nb, Zr, and Zn.

Examples of Ni-rich compounds of formula (I) are Li[Ni_{0.8}Co_{0.1}Mn_{0.1}]O₂ (NCM 811), Li[Ni_{0.6}Co_{0.2}Mn_{0.2}]O₂ (NCM 622), and Li[Ni_{0.5}Co_{0.2}Mn_{0.3}]O₂ (NCM 523).

Further examples of mixed lithium transition metal oxides containing Mn and at least one second transition metal are manganese-containing spinels of formula (III)

Li₁₊ₜM₂₋ₜO₄₋ₛ (III)

wherein
s is 0 to 0.4,
t is 0 to 0.4, and
M is Mn and at least one further metal selected from Co and Ni, preferably M is Mn and Ni and optionally Co, i.e. a part of M is Mn and another part of Ni, and optionally a further part of M is selected from Co.

The cathode active material may also be selected from lithium intercalating mixed oxides containing Ni, Al and at least one second transition metal, e.g. from lithium intercalating mixed oxides of Ni, Co and Al. Examples of mixed oxides of Ni, Co and Al are compounds of formula (IV)

Li[NiₕCoᵢAlⱼ]O₂ (IV)

wherein
h is 0.7 to 0.9, preferred 0.8 to 0.87, and more preferred 0.8 to 0.85;
i is 0.15 to 0.20; and
j is 0.02 to 10, preferred 0.02 to 1, more preferred 0.02 to 0.1, and most preferred 0.02 to 0.03.

The cathode active material may also be selected from LiMnPO₄, LiNiPO₄ and LiCoPO₄. These phosphates show usually olivine structure and usually upper cut-off voltages of at least 4.5 V have to be used for charging.

The cathode (B) may further comprise electrically conductive materials like electrically conductive carbon and usual components like binders. Compounds suited as electrically conductive materials and binders are known to the person skilled in the art. For example, the cathode may comprise carbon in a conductive polymorph, for example selected from graphite, carbon black, carbon nanotubes, graphene or mixtures of at least two of the aforementioned substances. In addition, the cathode may comprise one or more binders, for example one or more organic polymers like polyethylene, polyacrylonitrile, polybutadiene, polypropylene, polystyrene, polyacrylates, polyvinyl alcohol, polyisoprene and copolymers of at least two comonomers selected from ethylene, propylene, styrene, (meth)acrylonitrile and 1,3-butadiene, especially styrene-butadiene copolymers, and halogenated (co)polymers like polyvinlyidene chloride, polyvinly chloride, polyvinyl fluoride, polyvinylidene fluoride (PVdF), polytetrafluoroethylene, copolymers of tetrafluoroethylene and hexafluoropropylene, copolymers of tetrafluoroethylene and vinylidene fluoride and polyacrylnitrile.

The anode (A) comprised within the lithium batteries of the present invention comprises an anode active material that can reversibly occlude and release lithium ions or is capable to form an alloy with lithium. In particular carbonaceous material that can reversibly occlude and release lithium ions can be used as anode active material. Carbonaceous materials suited are crystalline carbon such as a graphite material, more particularly, natural graphite, graphitized cokes, graphitized MCMB, and graphitized MPCF; amorphous carbon such as coke, mesocarbon microbeads (MCMB) fired below 1500°C, and mesophase pitch-based carbon fiber (MPCF); hard carbon and carbonic anode active material (thermally decomposed carbon, coke, graphite) such as a carbon composite, combusted organic polymer, and carbon fiber.

Further anode active materials are lithium metal, or materials containing an element capable of forming an alloy with lithium. Non-limiting examples of materials containing an element capable of forming an alloy with lithium include a metal, a semimetal, or an alloy thereof. It should be understood that the term "alloy" as used herein refers to both alloys of two or more metals as well as alloys of one or more metals together with one or more semimetals. If an alloy has metallic properties as a whole, the alloy may contain a nonmetal element. In the texture of the alloy, a solid solution, a eutectic (eutectic mixture), an intermetallic compound or two or more thereof coexist. Examples of such metal or semimetal elements include, without being limited to, titanium (Ti), tin (Sn), lead (Pb), aluminum, indium (In), zinc (Zn), antimony (Sb), bismuth (Bi), gallium (Ga), germanium (Ge), arsenic (As), silver (Ag), hafnium (Hf), zirconium (Zr) yttrium (Y), and silicon (Si). Metal and semimetal elements of Group 4 or 14 in the long-form periodic table of the elements are preferable, and especially preferable are titanium, silicon and tin, in particular silicon. Examples of tin alloys include ones having, as a second constituent element other than tin, one or more elements selected from the group consisting of silicon, magnesium (Mg), nickel, copper, iron, cobalt, manganese, zinc, indium, silver, titanium (Ti), germanium, bismuth, antimony and chromium (Cr). Examples of silicon alloys include ones having, as a second constituent element other than silicon, one or more elements selected from the group consisting of tin, magnesium, nickel, copper, iron, cobalt, manganese, zinc, indium, silver, titanium, germanium, bismuth, antimony and chromium.

A further possible anode active material is silicon which is able to intercalate lithium ions. The silicon may be used in different forms, e.g. in the form of nanowires, nanotubes, nanoparticles, films, nanoporous silicon or silicon nanotubes. The silicon may be deposited on a current collector. The current collector may be a metal wire, a metal grid, a metal web, a metal sheet, a metal foil or a metal plate. Preferred the current collector is a metal foil, e.g. a copper foil. Thin films of silicon may be deposited on metal foils by any technique known to the person skilled in the art, e.g. by sputtering techniques. One possibility of preparing Si thin film electrodes are described in R. Elazari et al.; Electrochem. Comm. 2012, 14, 21-24. It is also possible to use a silicon/carbon mixture as anode active material according to the present invention.

Other possible anode active materials are lithium ion intercalating oxides of Ti.

Preferably the anode active material is selected from carbonaceous material that can reversibly occlude and release lithium ions, particularly preferred the carbonaceous material that can reversibly occlude and release lithium ions is selected from crystalline carbon, hard carbon and amorphous carbon, in particular preferred is graphite. In another preferred embodiment the anode active is selected from silicon that can reversibly occlude and release lithium ions, preferably the anode comprises a thin film of silicon or a silicon/carbon mixture. In a further preferred embodiment the anode active is selected from lithium ion intercalating oxides of Ti.

The anode and cathode may be made by preparing an electrode slurry composition by dispersing the electrode active material, a binder, optionally a conductive material and a thickener, if desired, in a solvent and coating the slurry composition onto a current collector. The current collector may be a metal wire, a metal grid, a metal web, a metal sheet, a metal foil or a metal plate. Preferred the current collector is a metal foil, e.g. a copper foil or aluminum foil.

The inventive lithium batteries may contain further constituents customary per se, for example separators, housings, cable connections etc. The housing may be of any shape, for example cuboidal or in the shape of a cylinder, the shape of a prism or the housing used is a metal-plastic composite film processed as a pouch. Suited separators are for example glass fiber separators and polymer-based separators like polyolefin separators.
Several inventive lithium batteries may be combined with one another, for example in series connection or in parallel connection. Series connection is preferred. The present invention further provides for the use of inventive lithium ion batteries as described above in devices, especially in mobile devices. Examples of mobile devices are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers. But the inventive lithium ion batteries can also be used for stationary energy stores.

Even without further statements, it is assumed that a skilled person is able to utilize the above description in its widest extent. Consequently, the preferred embodiments and examples are to be interpreted merely as a descriptive enclosure which in no way has any limiting effect at all.

The invention is illustrated by the examples which follow, which do not, however, restrict the invention.

### Examples

### I. Electrolyte compositions

A base electrolyte composition was prepared from ethylene carbonate (EC) and diethyl carbonate (DEC) in a ratio of EC:DEC of 30:70 vol%, 1.1 M LiPF₆, 2.5 wt.% vinylene carbonate (VC), 0.15 wt.% LiBF₄, and 1.75 wt.% mono fluoro ethylene carbonate (FEC). To this base electrolyte composition different amounts of a mixture of cis- and trans-1,3,5-cyclohexane trinitrile containing 58.4 % cis-1,3,5-cyclohexane trinitrile and 41.6 % trans-isomer, and of cis-1,3,5-cyclohexane trinitrile with a purity of 98.5% cis-isomer and 1.5 % trans-isomer resulting in a total concentration of 2 wt.% of cis- and trans-1,3,5-cyclohexane trinitrile with varying ratios of cis-isomer to trans-isomer. The percentages of cis- and trans-isomer present were determined by gas chromatography as described above. The percentages of cis-isomer based on the total amount of cis- and trans-1,3,5-cyclohexane trinitrile are shown as "% cis" in Table 1.

### II. Electrochemical cells

Commercially available wound pouch dry cells (Lithium Cobalt Oxide vs Graphite) were dried at 70 °C *in vacuo* for 24 h and were then filled with 700 µL electrolyte under Argon atmosphere. After 5h rest at room temperature the cells were evacuated and sealed. The cells were then cycled between 2.75 and 4.4 V for 5 cycles, charged to 4.4 V and stored at 85 °C for 24 h. The initial capacity "Cap-i" was the discharge capacity of the 5^{th} cycle. DC internal resistance (DCIR) measurements were carried out before and after the 85°C storage by applying current interrupt during 10 seconds. The results are summarized in Table 1.

### III. Change of cell volume

The volume was measured by Archimedes principle. Before and after storing the cells for 24 h at 85 °C the cells were cooled down to room temperature for 2 h and their weight in air and fully immersed in 25 °C water was determined. The difference of the two weights divided by the density of water at 25 °C afforded the volume change of the cells. The results are displayed in Table 1 in the column "Delta Vol".

### IV. Dissolution of Cobalt from the cathode active material

Dissolution of cobalt determined as amount of Co detected at the graphite electrode using ICP-OES method (inductively coupled plasma optical emission spectrometry) after storage at 85°C for 24h. The lower the value the better. The results are shown in Table 1.

**Table 1**

| **Example** | **Cis-isomer [%]** | **Cap-i** | **Rec. Cap. [%]** | **Delta Vol [mL]** | **DCIR 10s-i** | **DCIR 10s-f** | **Delta DCIR10s** | **Co dis [ppm]** |
|---|---|---|---|---|---|---|---|---|
| 1 | 98.5 | 234.25 | 84.6 | 0.71 | 0.58 | 1.6 | 1.02 | 543 |
| 2 | 92.8 | 232.6 | 86.6 | 0.55 | 0.89 | 1.53 | 0.64 | 333 |
| 3 | 88.5 | 228.8 | 86.9 | 0.54 | 1.12 | 1.49 | 0.37 | 43 |
| 4 | 78.5 | 232.7 | 87 | 0.34 | 0.99 | 1.47 | 0.48 | 44 |
| 5 | 68.4 | 232.9 | 83.7 | 0.43 | 1.1 | 1.84 | 0.74 | 84 |
| 6 | 64.1 | 229.08 | 86 | 0.46 | 0.94 | 1.7 | 0.76 | 59 |
| 7 (comp) | 58.4 | 234.85 | 84.4 | 0.8 | 0.55 | 1.7 | 1.15 | 829 |

All electrochemical cells containing cis- and trans-1,3,5-cyclohexane trinitrile with at least 60% of the cis-isomer show less Co dissolution, less volume change and less increase of internal resistance after storage for 24 h at 85 °C than the electrochemical cell containing the same overall amount of cis- and trans-1,3,5-cyclohexane trinitrile but having less than 60% of the cis-isomer.

## Claims

1. An electrolyte composition containing
(i) at least one aprotic organic solvent;
(ii) at least one conducting salt;
(iii) 1,3,5-cyclohexane trinitrile(s), wherein the content of cis-1,3,5-cyclohexane trinitrile is at least 60 %, based on the total amount of 1,3,5-cyclohexane trinitrile(s); and
(iv) optionally one or more additives.

2. The electrolyte composition according to claim 1, wherein the content of cis-1,3,5-cyclohexane trinitrile ranges from at least 60 % to not more than 99 %, based on the total amount of 1,3,5-cyclohexane trinitrile(s) (iii).

3. The electrolyte composition according to claim 1 or 2, wherein the content of cis-1,3,5-cyclohexane trinitrile ranges from at least 60% to not more than 90 %, based on the total amount of 1,3,5-cyclohexane trinitrile(s) (iii).

4. The electrolyte composition according to any of claims 1 to 3, wherein the electrolyte composition contains in total 0.01 to 5 wt.-% 1,3,5-cyclohexane trinitrile(s) (iii) based on the total weight of the electrolyte composition.

5. The electrolyte composition according to any of claims 1 to 4, wherein the at least one aprotic organic solvent (i) is selected from cyclic and acyclic organic carbonates, di-C₁-C₁₀-alkylethers, di-C₁-C₄-alkyl-C₂-C₆-alkylene ethers and polyethers, cyclic ethers, cyclic and acyclic acetales and ketales, orthocarboxylic acids esters, cyclic and acyclic esters and diesters of carboxylic acids, cyclic and acyclic sulfones, and cyclic and acyclic nitriles and dinitriles.

6. The electrolyte composition according to any of claims 1 to 4, wherein the at least one aprotic organic solvent (i) is selected from cyclic and acyclic organic carbonates and cyclic and acyclic esters of carboxylic acids.

7. The electrolyte composition according to any of claims 1 to 6, wherein at least one conducting salt (ii) is selected from lithium salts.

8. The electrolyte composition according to any of claims 1 to 7, wherein the electrolyte composition contains at least one conducting salt (ii) is selected from LiPF₆, LiAsF₆, LiSbF₆, LiCF₃SO₃, LiBF₄, lithium bis(oxalato) borate, lithium difluoro(oxalato) borate, LiClO₄, LiN(SO₂C₂F₅)₂, LiN(SO₂CF₃)₂, LiN(SO₂F)₂, and LiPF₃(CF₂CF₃)₃.

9. The electrolyte composition according to any of claims 1 to 8, wherein the electrolyte composition contains at least one additive (iv) selected from film forming additives, flame retardants, overcharging additives, wetting agents, HF and/or H₂O scavenger, stabilizer for LiPF₆ salt, ionic salvation enhancer, corrosion inhibitors, and gelling agents.

10. The electrolyte composition according to any of claims 1 to 9, wherein the electrolyte composition contains
(i) at least 74.89 wt.-% of at least one organic aprotic solvent;
(ii) 0.1 to 25 wt.-% of at least one conducting salt;
(iii) in total 0.01 to 5 wt.-% of 1,3,5-cyclohexane trinitrile(s), wherein the content of cis-1,3,5-cyclohexane trinitrile is at least 60 % based on the total amount of 1,3,5-cyclohexane trinitrile(s); and
(iv) 0 to 25 wt.-% of at least one additive,
based on the total weight of the electrolyte composition.

11. Use of 1,3,5-cyclohexane trinitrile(s) in electrochemical cells, wherein the content of cis-1,3,5-cyclohexane trinitrile is at least 60 %, based on the total amount of 1,3,5-cyclohexane trinitrile(s) present in the electrochemical cell.

12. The use according to claim 11 wherein the 1,3,5-cyclohexane trinitrile(s) is used as additive for reducing metal leaching from electrode active material present in the electrochemical cells.

13. An electrochemical cell comprising the electrolyte composition according to any of claims 1 to 10.

14. The electrochemical cell according to claim 13 wherein the electrochemical cell is a lithium battery.

15. The electrochemical cell according to claim 13 or 14 wherein the electrochemical cell comprises a cathode containing at least one cathode active material selected from lithium intercalating transition metal oxides and lithium transition metal phosphates.
